# EUROPEAN PATENT SPECIFICATION

(11) **EP 3 408 577 B1**
(45) Date of publication and mention of the grant of the patent: **07.06.2023**
(21) Application number: 17708603.0
(22) Date of filing: 26.01.2017
(51) Int. Cl.: F16L 57/00, F16L 57/02, F16L 19/02, F16L 33/30, F16L 27/08, F16L 35/00, B60D 1/62, B60T 17/04

(54) **IMPROVED SWIVEL COUPLING AND HOSE ASSEMBLY AND KIT UTILIZING THE SAME**
VERBESSERTE DREHKUPPLUNG UND SCHLAUCHANORDNUNG UND KIT MIT DIESER
COUPLAGE PIVOTANT AMÉLIORÉ ET ENSEMBLE DE TUYAUX ET KIT UTILISANT CELUI-CI

(30) Priority: 26.01.2016 US 201662287420 P; 10.08.2016 US 201615233006
(43) Date of publication of application: 05.12.2018
(73) Proprietor: Tectran MFG. Inc., Cheektowaga, NY 14225 (US)
(72) Inventor: CAPRIO, Kenneth M., Cheektowaga, NY 14225 (US); BADHORN, Edward H., Clarence Center, NY 14031 (US)
(74) Representative: Isarpatent
(86) International application number: PCT/US2017/015108
(87) International publication number: WO 2017/132361

(56) References cited:
- EP-A1- 2 584 239
- WO-A2-2005/081901
- AU-B2- 666 153
- JP-A- 2011 089 598
- US-A1- 2006 186 661

## Description

### FIELD OF THE INVENTION

The invention described herein relates generally to the field of swivel coupling assemblies and to swivel coupling assemblies which are easy to install and highly reliable even when used with tube and hose lines operating in harsh industrial and commercial environments. More specifically, the present invention provides improved operation, durability, dependability, weather-resistance, usability, and reliability of swivel couplings, assemblies, and kits for air and hydraulic connections in tractor-trailer and other industrial and commercial applications and environments.

### BACKGROUND OF THE INVENTION

Applications of fittings and fitting assemblies for air tube and hose line connections in industrial and commercial environments require resistance to harsh environmental conditions and reliability under stress during installation and operation. For example, in applications in the freight hauling trucking and transportation industry, tractor-trailer air brake fittings and hose and tube assemblies undergo continuous exposure to the elements, often in frigid conditions. Winter road salts and brine, dirt, grease, and other solvents erode fittings and assemblies of critical air brake tube and hose connections, putting the safety of the driver and highway motorists at risk.

Tube and hose lines, as well as grips, fittings and connectors/couplings for such tube and hose lines used within harsh industrial and commercial environments generally must withstand such harsh environments as well as perform reliably under the stress and strain forces encountered during installation and operation. Such tube and hose lines may involve high pressure hydraulics or air and often require some flexibility of the tube or hose. It should be understood that the terms "hose" and "tube", while often used interchangeably, are technically different components. Hoses are generally reinforced in some way, normally with imbedded braid reinforcement, wire reinforcement, reinforcement with a stiff plastic, dual walls, or a single heavy wall. Hoses are often used and rated for applications that involve high pressure. Tubing, on the other hand, is not reinforced, or is sparsely reinforced, and is often used for gravity flow or lower pressure applications.

Hoses and tubes are commonly used in applications within the freight hauling industry, for example, to supply pressurized air for air brake operation between a tractor cab unit and a freight trailer, or from a locomotive to railway air brakes on railroad cars. Inherent to the freight industry is the constant coupling and decoupling of hoses/tubes as trailers are left for loading or unloading and other trailers are picked up for delivery. Various types of components such as gladhand connectors (couplers resembling a pair of "hands shaking"), grips and couplers/connectors, including swivel couplings, are used to interconnect hose/tube sections to other hoses/tubes sections and to terminals.

During installation and operation of such hoses and components in the freight hauling context, stresses from bending, twisting, and kinking are experienced. For instance, tractor-trailer operators subject air brake lines to twisting while bending them into position in tight quarters between the tractor and trailer. Drivers and fleet maintenance personnel repetitively connect and disconnect air brake lines between the tractor and trailer using hand holds on the hose at the fittings to achieve the needed leverage to secure and release gladhand connections. Connection of tractor to trailer using integrated, multiple hose and tube assemblies, or "kits", often wrapped or covered with abrasion resistant materials, requires flexibility in the manner of coupling the multiple fittings to their respective fixed air and hydraulic connections.

Conventional grips and couplers/connectors including swivel couplings, however, do not offer sufficient protection against kinking of the hose and tube, particularly at the gladhand connections and occasionally in tractor connections where the ports are mounted higher and their output is pointed vertically requiring the hose to bend toward the trailer, and are difficult to install and not sufficiently reliable during operation. Conventional hose and tube assemblies using only coiled springs or bend restrictors of a thin, flimsy or too-rigid materials and sometimes of a not-firmly attached nature at the fittings provide inadequate protection from the shearing action that takes place during gladhand connection. In the case of the common spring guard, the spring coils shift and do not prevent kinking and bending during installation and operation.

In particular, in the freight hauling industry, conventional air brake tube or hose fittings and tube or hose assemblies undergo stress during tractor-trailer connections and operation. The conventional non-swivel hose and tube fittings and assemblies prevent ease of connecting hose and tube assemblies to the tractor braking air supply lines and typically require the "cork-screwing" of fixed male fittings into fixed swivel fittings, or the disassembly and reassembly of the fittings during installation. During operation, fixed end fittings prevent rotation of hoses where some movement is desirable, such as during lift axle operation, putting further stress on the air brake hose and tube fittings and assemblies and leading to premature failure of the tractor-trailer air brake system. Prior art live swivel fittings do not provide sufficient support, free, (live) rotation and assembly integrity under stress or the long-term sealing qualities necessary in harsh environmental and operational conditions. Connection of conventional hose assemblies typically requires multiple wrenches to couple hose assemblies to fixed fittings or to join multiple hose assemblies. The use of crimped nuts in prior art live swivel fittings requires the use of materials such as steel rather than the more malleable brass to prevent over-torqueing and leakage. This leads to corrosion issues and fitting seize-up.

AU 666 153 B2 discloses a swivel type end fitting adapted to be secured to the end of a hose, comprising a generally hollow cylindrical insert having a first end portion, an intermediate portion defining an outer diameter, and a second end portion defining an outer diameter, a first external shoulder being defined between said first end portion of said insert and said intermediate portion, a second external shoulder being defined between said intermediate portion and said second end portion of said insert. The fitting further includes a generally hollow cylindrical swivel nut having a first end portion and a second end portion, an internal shoulder being defined between said first end portion of said swivel nut and said second end portion of said swivel nut, wherein said swivel nut is disposed about said insert such that said internal shoulder engages said first external shoulder of said insert. Furthermore, the fitting includes a generally hollow cylindrical collar having a partially closed end portion defining an inner diameter which is greater than said outer diameter of said second end portion of said insert and less then said outer diameter of said intermediate portion of said insert, wherein said collar is disposed about said insert such that said partially closed end portion is installed on said insert without contacting said second end portion of said insert and without deformation so as to engage said second external shoulder of said insert.

### SUMMARY OF INVENTION

It is therefore an object of the invention to provide swivel couplings, hose assemblies and kits which protect against stresses caused by kinking, twisting, bending, snagging, tangling and abrading.

It is another object of the invention to provide swivel couplings and swivel coupling assemblies with improved rotation during installation and operation, protecting the system's integrity and ease of connecting and disconnecting of connections at the mating couplings such as tractor and trailer gladhands.

It is yet a further object of the invention to provide swivel couplings and swivel coupling assemblies with longer-life, redundant air seals, and a stronger friction hold at the barrel end of the fitting.

The invention provides a swivel coupling assembly in accordance with claim 1, a hose assembly in accordance with claim 9, and a kit in accordance with claim 13. In a first aspect of this invention there is included a swivel coupling assembly, comprising a first annular member having an outer surface and an inner surface. The first annular member includes a first end portion having at least one annular barb, a second end portion spaced from the first end portion and an insert member. There is an angled shoulder positioned between the at least one annular barb and the insert member and at least one annular groove disposed in the outer surface of the first annular member positioned between the shoulder and the insert member and the at least one annular groove containing a seal. There is a first bearing surface on a first side of the at least one annular groove in the direction of the shoulder and a second bearing surface on a second side of the at least one annular groove in the direction of the insert member. The first bearing surface and the second bearing surface have a width equal to or greater than a width of the at least one annular groove. There is a second annular member having an outer surface and an inner surface, the inner surface defining a bore configured to receive the first annular member. The second annular member includes a first end portion having a first opening in communication with the bore and a second end portion spaced from the first end portion and having a second opening in communication with the bore. When the first annular member is inserted into the bore of the second annular member, the shoulder of the first annular member frictionally engages the bore of the second annular member proximate the first opening. This allows the first annular member to rotate relative to the second annular member. The insert member of the first annular member terminates in the bore proximate the second opening and the seal engages with and seals the bore at a location between the first and second openings of second annular member. The at least one annular groove is spaced by a distance of at least the width of the first and second bearing surfaces from the shoulder and the second opening, respectively. There is included an annular retaining ring groove disposed in the surface of the first annular member and positioned between the at least one annular groove and the shoulder, the annular retaining ring groove containing a retaining ring which protrudes above the surface of the first annular member. Further, there is included an annular recess in the inner surface of the bore, wherein the annular recess is configured to receive the retaining ring when the first annular member is inserted into the second annular member, the annular recess being aligned with the annular retaining ring groove. The inner surface of the bore from the first opening in the first end portion of the second annular member to the annular recess is frusto-conically shaped and wherein the frusto-conically shaped inner surface is angled at least five degrees with respect to a longitudinal axis of the second annular member, thereby allowing the retaining ring to be gradually compressed when the first annular member is inserted into the bore of the second annular member as the retaining ring travels along the inner surface until it reaches the annular recess and expands into and is seated in the annular recess.

In one or more embodiments the following features may be included. The at least one annular groove may include a plurality of annular grooves and a like plurality of seals, one disposed in each of the plurality of annular grooves. The first bearing surface and the second bearing surface may have widths between one (1) and three and one half (3.5) times the width of the at least one annular groove. The annular recess may be located at a position between the shoulder and the at least one annular groove containing the seal. The first opening in the first end portion may have a chamfered edge. The first annular member may further include a flange located between the shoulder and the plurality of grooves which engages with a stop on the inner surface of the bore when the first annular member is inserted into the second annular member to position the first annular member within the bore such that the shoulder of the first annular member frictionally engages the bore of the second annular member proximate the first opening and the insert member of the second end portion of the first annular member terminates in the bore proximate the second opening. The first end portion of the first annular member may include a plurality of annular barbs which are configured to engage and retain a hose. The inner surface of the first annular member may define a bore configured to carry a fluid there-through. The outer surface of the second annular member may include a threaded portion for being inserted into and engaged with a hose or a complimentarily threaded fixture. The outer surface of the second annular member may further includes a head having a plurality of flat surfaces configured to be engaged by a tool to impart torque to rotate the second annular member to engage the hose or a complimentarily threaded fixture.

In another aspect of this disclosure that is not covered by the invention, there is a hose assembly, comprising a hose having a first end and a second end, a first swivel coupling affixed to the first end of the hose, a second swivel coupling affixed to the second end of the hose. Each of the first and second swivel couplings include a first annular member having an outer surface and an inner surface. The first annular member including a first end portion having at least one annular barb, a second end portion spaced from the first end portion and an insert member. There is a shoulder positioned between the at least one annular barb and the insert member and at least one annular groove disposed in the outer surface of the first annular member positioned between the shoulder and the insert member and the at least one annular groove containing a seal. There is a first bearing surface on a first side of the at least one annular groove in the direction of the shoulder and a second bearing surface on a second side of the at least one annular groove in the direction of the insert member. The first bearing surface and the second bearing surface have a width equal to or greater than a width of the at least one annular groove. There is a second annular member having an outer surface and an inner surface, the inner surface defining a bore configured to receive the first annular member. The second annular member includes a first end portion having a first opening in communication with the bore and a second end portion spaced from the first end portion and having a second opening in communication with the bore. When the first annular member is inserted into the bore of the second annular member, the shoulder of the first annular member frictionally engages the bore of the second annular member proximate the first opening. This allows the first annular member to rotate relative to the second annular member. The insert member of the first annular member terminates in the bore proximate the second opening and the seal engages with and seals the bore at a location between the first and second openings of second annular member. The at least one annular groove is spaced by a distance of at least the width of the first and second bearing surfaces from the shoulder and the second opening, respectively.

In one or more examples the following features may be included. The at least one annular groove of the first and second swivel couplings may include a plurality of annular grooves and may further include a like plurality of seals, one disposed in each of the plurality of annular grooves. The first bearing surface and the second bearing surface may have widths between one (1) and three and one half (3.5) times the width of the at least one annular groove. The first and second swivel couplings may further include an annular retaining ring groove disposed in the surface of the first annular member and positioned between the at least one annular groove and the shoulder, the annular retaining ring groove containing a retaining ring which protrudes above the surface of the first annular member. The first and second swivel couplings may further include an annular recess in the inner surface of the bore, wherein the annular recess is configured to receive the retaining ring when the first annular member is inserted into the second annular member, and wherein the annular recess is located at a position between the shoulder and the at least one annular groove containing the seal. For the first and second swivel couplings the inner surface of the bore from the first opening in the first end portion of the second annular member to the annular recess may be frusto-conically shaped and wherein the frusto-conically shaped inner surface is angled at least five degrees with respect to a longitudinal axis of the second annular member, thereby allowing the retaining ring to be gradually compressed when the first annular member is inserted into the bore of the second annular member as the retaining ring travels along the inner surface until it reaches the annular recess and expands into and is seated in the annular recess. For the first and second swivel couplings the first opening in the first end portion may have a chamfered edge. Proximate each of the first end and the second end of the hose may be included a collar disposed about the hose, the collar including an identification marking.

In a second aspect of this invention there is a hose assembly, comprising a hose having a first end and a second end, a grip and fitting assembly affixed to the first end of the hose and a swivel coupling in accordance with the first aspect of the invention affixed to the second end of the hose.

In yet one or more other embodiments the following features may be included. The at least one annular groove of the swivel coupling may include a plurality of annular grooves and further included are a like plurality of seals, one disposed in each of the plurality of annular grooves. The first bearing surface and the second bearing surface may have widths between one (1) and three and one half (3.5) times the width of the at least one annular groove. The swivel coupling includes an annular retaining ring groove disposed in the surface of the first annular member and positioned between the at least one annular groove and the shoulder, the annular retaining ring groove containing a retaining ring which protrudes above the surface of the first annular member. The swivel coupling further includes an annular recess in the inner surface of the bore, wherein the annular recess is configured to receive the retaining ring when the first annular member is inserted into the second annular member, and wherein the annular recess is aligned with the annular retaining ring groove.

In an additional aspect of this invention there is a kit having a plurality of hose assemblies in accordance with the second aspect of the invention bundled together with a wrap.

The above and other benefits and advantages of the present invention will be readily apparent from the Detailed Description to follow.

### BRIEF DESCRIPTION OF THE DRAWINGS

Embodiments of the present invention will now be described, by way of example only, with reference to the attached Figures, wherein:
**FIG. 1** shows a perspective view of flexible tapered grip assembly not covered by the present invention shown with grip and fitting sections disconnected;
**FIG. 2** shows a side view of a complete flexible tapered grip assembly not covered by invention connected with related elements shown in silhouette;
**FIG. 3** shows an end view of the grip section not covered by the invention, the end view being from the right end of **FIG. 4****;**
**FIG. 4** shows a side section view of the grip section of the assembly taken along line **4-4** of **FIG. 3****;**
**FIGS. 5A** through **5C** show a series of close-up side views with the fitting section shown intact and a partial length of the grip section shown in a cutaway lengthwise cross section so as to illustrate the before, during, and after stages of fitting insertion into the grip;
**FIG. 6** shows a side view of the complete flexible tapered grip assembly not covered by the invention connected with related elements shown in silhouette taken along line **6-6** of **FIG. 3****;**
**FIG. 7** shows a close-up view of the flexible tapered grip assembly not covered by the present invention shown with grip and fitting sections disconnected and the grip section partially cutaway to reveal internal keyway boss structures;
**FIG. 8** is an exploded perspective view of the swivel coupling assembly according to this invention;
**FIGS. 9A and 9B** show a cross-sectional view of the swivel coupling assembly of **FIG. 8** taken along line B-B;
**FIG. 10** is an exploded perspective view of another embodiment of the swivel coupling assembly not covered by this invention;
**FIGS. 11A** and **11B** show a cross-sectional view of the swivel coupling assembly of **FIG. 10** taken along line B'-B';
**FIGS. 12A** and **12B** are a perspective views of hose assemblies with single and dual swivel couplings, respectively, according to an aspect of this invention;
**FIGS. 13A** and **13B** are perspective views of a hose assemblies having swivel couplings installed gladhand "swinger" fixtures, according to an aspect of this invention;
**FIG. 14** is a perspective view of another hose assembly with a swivel coupling according to an aspect of this invention installed at one end of the hose and a taper grip assembly at the other end of the hose;
**FIGS. 15A** and **15B** are perspective views of kits including hose and tube assemblies having a swivel coupling according to an aspect of this invention installed at one end of the hose and a taper grip assembly at the other end of the hose; and
**FIGS. 16A** and **16B** shows various components optionally used in the assemblies and kits incorporating swivel couplings and/or flexible tapered grip shown in **FIGS. 12-15****.**

### DETAILED DESCRIPTION

The present invention will now be described more fully herein with reference to exemplary embodiments, examples of which are illustrated in the accompanying drawings. Embodiments and implementations set forth in the following detailed description do not represent all embodiments and implementations of the claimed invention. One skilled in the art will appreciate that the present teachings can be practiced with embodiments other than those summarized or disclosed below by the Figures and Detailed Description of the Invention to follow.

For purposes of the following discussion, the terms "hose" and "tube" may be used throughout interchangeably and should not be considered as limiting the invention. Use of either term is meant to encompass both hoses and tubes and all applicable types of such hoses and tubes. Likewise, the exemplary embodiments may describe particular connectors, flexible tapered grips and couplers/connectors, including swivel couplings, however, it should be understood that these are examples of implementations of the present invention. Indeed, the present invention may be implemented within a variety of connectors, flexible tapered grips and couplers/connectors including swivel couplings.

Further, the invention is described herein with regard to transportation applications, in particular trucking; however, there may be other equally suitable applications of the present invention outside of the context of trucking and such applications are well within the intended scope of the present disclosure. In particular, the present invention may be applicable to any suitable mobile or fixed implementations including, but not limited to, air or gas, hydraulic connections, fuel or other fluid transfer, land or marine connections, airplane terminal vestibules, and/or ship-to-shore connections.

A flexible tapered grip assembly for installation will first be described. Following the description of the flexible tapered grip assembly will be a description of the improved swivel coupling according to an aspect of the invention and then certain hose assemblies/kits using the flexible tapered grip assembly and/or the swivel coupling will be described.

### Flexible Tapered Grip

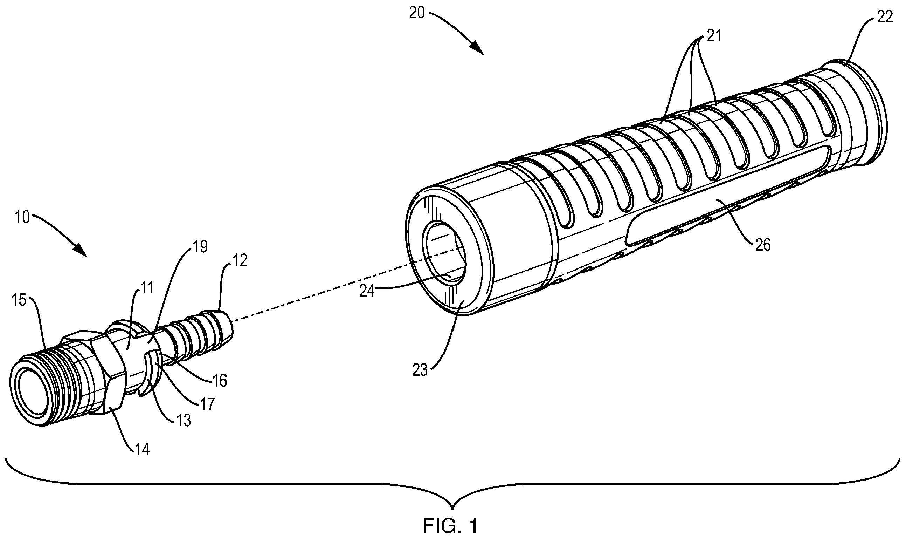

With regard to **FIG. 1****,** there is seen a three-dimensional illustration showing a flexible tapered grip assembly shown with two sections, one being a fitting **10** and the other being a grip **20.** For purposes of illustration, the assembly is shown where the fitting **10** and grip **20** are in a disconnected position relative to one another.

The grip **20** is a both flexible and tapered. Flexibility of the grip provides the ability of the grip to bend and yet return to its original shape. The grip **20** itself is a unitary structure fabricated from material suitable for the intended trucking environment which may be hostile to materials - i.e., where wide temperature variations occur and exposure to road salt and a variety of chemicals may occur. One suitable material includes thermoplastic vulcanizates (TPV) which are part of the thermoplastic elastomer (TPE) family of polymers. TPVs offer a combination of elastomeric properties, like compression and tension set, coupled with aging performance and chemical resistance. Other materials such as, but not limited to, ethylene propylene diene monomer (EPDM) thermoset rubber, nylon, or polyvinyl chloride (PVC) may be possible depending upon the intended environment. For example, PVC may not be suitably used for an intended cold weather implementation where flexibility is severely limited at reduced environmental temperatures. The grip **20** may be formed in any suitable manner including, but not limited to, injection molding. It should also be understood that the grip may be colored during molding and provided in a variety of color schemes (i.e., color coded) in accordance with any desired implementation (e.g. red for emergency brake lines, blue for service lines) and which assists to minimize incorrect tractor/trailer connections

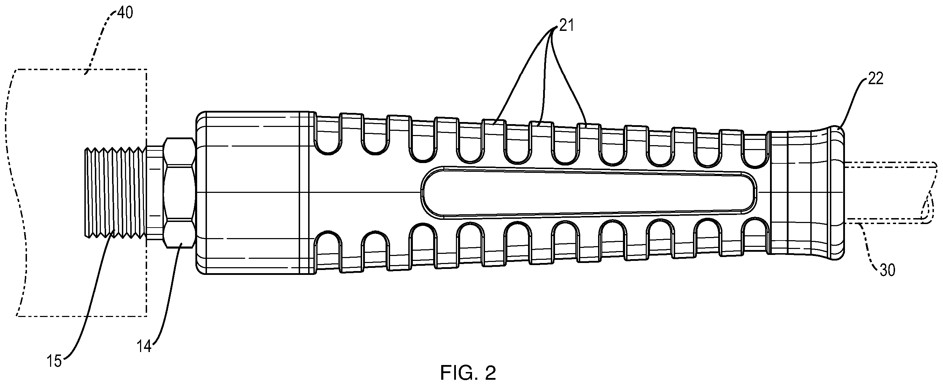

With continued reference to **FIG. 1** and additional reference to **FIG. 2****,** the grip **20** is seen as tapered from end to end. In particular, the grip **20** has an increased thickness at a first end **23** tapering to an opposite, second end that includes a tear-resistant rail **22.** The rail **22** is thickened so as to form a suitably reinforced ring around a length of air hose (shown by dotted line **30).** Oftentimes, such portion of air hose also includes a spring guard (not shown) to assist and support the flexing of the hose. Providing the thickened rail **22** at the spring guard end of the grip **20** prevents tearing of the grip **20** and improves kink resistance of hose and tube made of weather resistant, low-temperature materials and coatings.

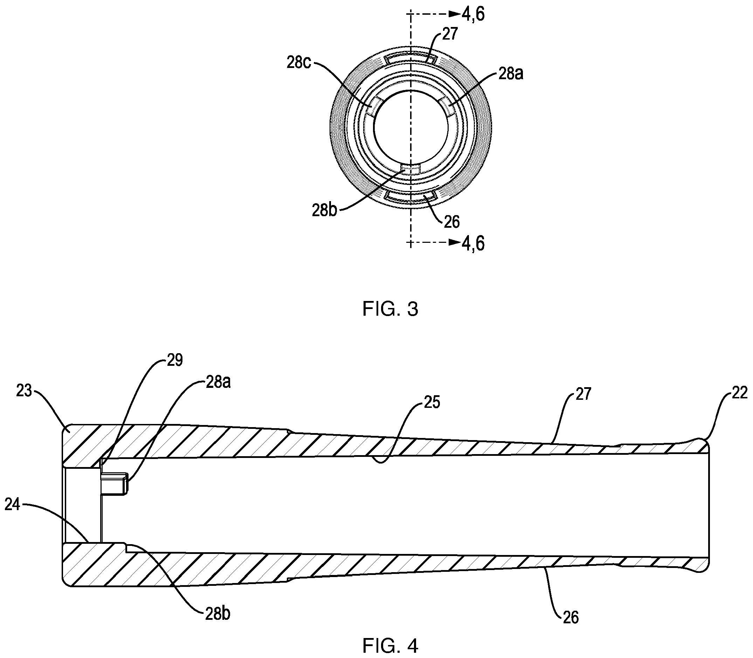

The grip **20** includes traction ridges **21** for an additional non-slip feature when the grip **20** is handled by a user. Recessed areas **26** (and **27** visible in **FIGS. 3** and **4**) may be provided for corporate labeling or cosmetic logos.

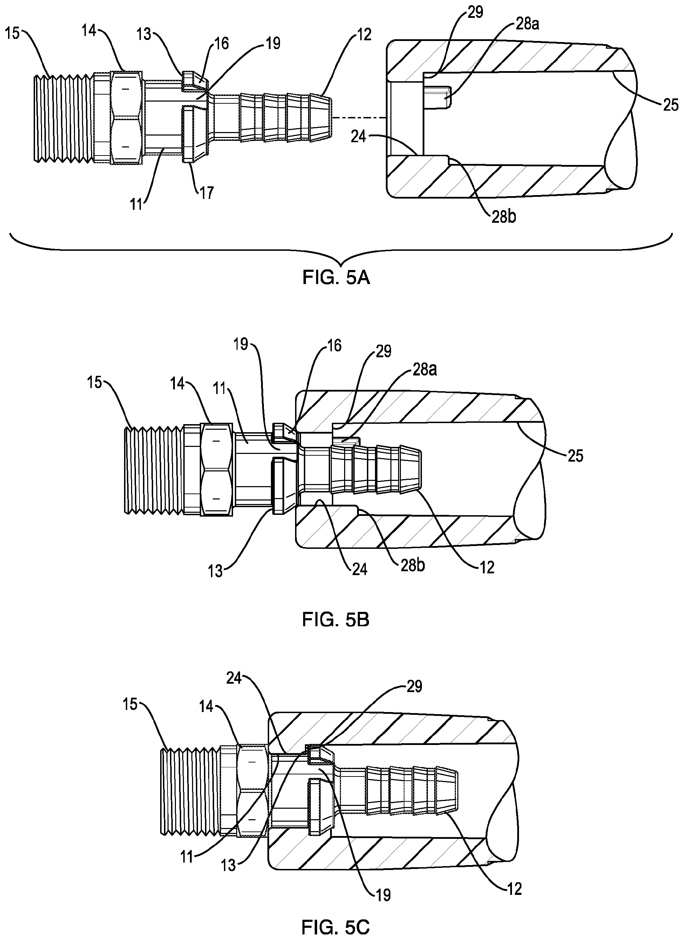

A fitting **10** is also shown in accordance with the inventive assembly. The fitting **10** includes a first coupling end **15** and a second coupling end **12** between which is located an exterior seating surface **11.** It is the exterior seating surface **11** of the fitting **10** and the interior seating surface **24** of the grip **20** which are intended to abut upon insertion of the fitting **10** into the first end **23** of the grip **20.** Such insertion is shown and described further below with regard to **FIGS. 5A** through **5C****.**

With continued reference to **FIGS. 1** and **2****,** the fitting **10** is seen to include a retaining shoulder **17** located between the first coupling end **12** and the second coupling end **15.** The retaining shoulder **17** has two sides with two very distinct purposes. One side of the retaining shoulder **17** includes a ramped surface **16.** The ramped surface **16** is intended as the part of the fitting **10** which first contacts the first end **23** of the grip **20** upon insertion of the fitting **10** into the grip **20.** The interior seating surface **11** may also include a beveled edge which facilitates the ramped surface **16** to at least initially contact the interior seating surface **11.** The other side of the retaining shoulder **17** includes a shoulder surface **13.** The shoulder surface **13** is opposite the ramped surface **16** and is oriented perpendicular to the exterior seating surface **11.**

The fitting **10** itself is formed from a corrosion-resistant material such as, but not limited to brass. The first end **15** of the fitting is provided with threading and a hex-nut section **14** of the fitting **10** is provided to enable a user to utilize a wrench to connect the fitting **10** to a coupling mechanism (shown in dotted line as **40**). The coupling mechanism **40** may be any suitable universal coupling mechanism such as, but not limited to, the aforementioned gladhand or similar coupler. As should be readily apparent from the description thus far and the accompanying **FIG. 2****,** the inventive grip and fitting assembly provides a new and useful means of connecting a universal coupling **40** to a length of hose **30.**

With reference to **FIGS. 3** and **4****,** there are respectively shown an end view and a side cross section view of the grip **20.** In particular, **FIG. 3** shows an end view of the grip section, the end view being from the right end of **FIG. 4** while **FIG. 4** shows a side section view of the grip section taken along line **4-4** of **FIG. 3****.** Here, the grip **20** is seen to include three keyway bosses **28a, 28b, 28c** with only two **28a, 28b** visible in cross section **FIG. 4****.**

It should be understood that each keyway boss **28a, 28b, 28c** corresponds to a keyway recess **19** located on the fitting **10.** As seen in **FIG. 1****,** the retaining shoulder **17** includes such keyway recesses and which are suitably dimensioned to matingly correspond a related keyway boss though only one of three such keyway recesses are visible. From **FIG. 4****,** it can be seen that each keyway boss **(28a** and **28b** visible) are located within a sidewall **25** of the substantially tubular interior **25** of the grip **20.** More specifically, each keyway boss is arranged along an annular lip **29** and adjacent to the interior seating surface **24.** It should be noted that while three keyway bosses and three corresponding keyway recesses are discussed, there may be any number of suitable pairs of keyway bosses and recesses such as, but not limited to, one, two, or four.

The annular lip **29** is configured perpendicular to the interior seating surface **24** and provides a surface against which the shoulder surface **13** of the fitting's shoulder **17** firmly abuts once the fitting **10** is completely inserted within the first end **23** of the grip **20.**

With regard to **FIGS. 5A** through **5C****,** there are illustrated a series of close-up side views showing the fitting along with a partial length of the grip. The partial length of the grip is illustrated as a cutaway lengthwise cross section so as to show a chronological series of before, during, and after stages of fitting insertion into the grip.

As shown in **FIG. 5B****,** the ramped surface **16** of the fitting first meets the outer edge of the interior seating surface **24.** Such outer edge of the interior seating surface **24** may be beveled to facilitate movement of retaining shoulder **17** through and over the entirety of the interior seating surface **24.** Here, it is also visible that the retaining shoulder **17** is sized with an outer dimension slightly larger than the inner dimension of the interior seating surface **24.**

It should be understood that the material from which the grip is fabricated will have elastic qualities such that the interior seating surface **24** will expand to allow the retaining should **17** to ride over it, but snap back into place once the retaining shoulder **17** is completely through and past the interior retaining surface **24.** This snap-fit action results in the configuration seen in **FIG. 5C****.** Here, the interior seating surface **24** is shown abutting the exterior seating surface **11** of the fitting. Likewise, the annular lip **29** of the grip is shown abutting the shoulder surface **13** which effectively permanently retains the fitting within the grip. Moreover, in such configuration shown, each keyway boss **28a-28c** and each corresponding keyway recess **19** interlock with one another upon abutment of the interior seating surface **24** with the exterior seating surface **11** so as to preclude rotational movement between the grip and the fitting. In this manner, both rotational and axial movement of the fitting within grip is prevented as the two are locked into place.

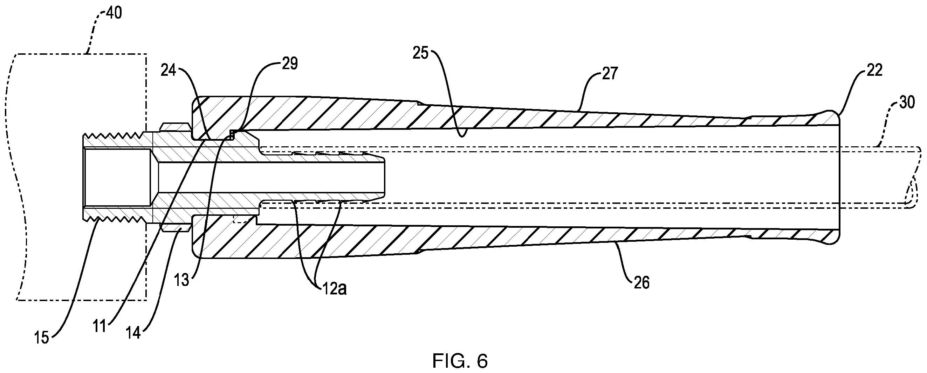

**FIG. 6** illustrates a side view of the complete flexible tapered grip assembly taken along line **6-6** of **FIG. 3****.** Here, the grip assembly is shown after the fitting is snap-fit into the grip and after the fitting is threaded to a coupling mechanism **40** and length of tubing **30.** In particular, it should be noted that the fitting includes barbs **12a,** or some suitable structure, which retain the length of tubing **30** upon the fitting. The tubular interior **25** of the grip itself is also suitably larger than the outer diameter of the tubing **30** so as to allow both unrestricted movement of the tube and yet still allow the grip to function as a strain relief boot with integrated fitting for hydraulic connections. Thus, the present disclosure provides a dual purpose strain relief boot and a grip for manual manipulation of a coupler (e.g., gladhand). Likewise, the space provided between the tubular interior **25** and the outer diameter of the tubing **30** also enables a coil spring (not shown) to be inserted over the tubing **30** all the way up to the fitting, further enhancing flexibility of the inventive assembly.

The strain relief aspect of the present disclosure also provides an "anti-kinking" characteristic such that the tubing attached to the fitting through the tapered grip section is precluded from kinking. Unrestricted movement of the tube within the grip at the end opposite the fitting occurs only to a point at which bending of the given tube will result in the tube coming into contact with the sidewall of the grip. Due to the tapered nature of the grip, the ability of the grip to bend along with the tube is a function of the thickness of the grip. The thinner end will therefore bend along with the abutting tube in a manner that is proportional with the varied thickness of the grip wall. This tapering provides flexible support of the tube while inhibiting the ability of the tube to kink. This is effective against kinking that may otherwise (in the absence of the present configuration) occur during the time of connection or at the time of operation (e.g., during a turning of the tractor cab relative to the trailer). Elongation of the grip may be provided so as to further enhance the anti-kinking characteristics of the present configuration. In such elongation instance, the grip may be provided in successively tapering sections interconnected to one another.

It should therefore be understood that the sidewall of the flexible tapered grip decreases in thickness along the substantially tubular interior from fitting end to a tear-resistant rail end, so as to oppose kinking of the tube during installation and operation. Moreover, the tear-resistant rail engages with the tube upon minimal bending radius, so as to provide freedom of movement of the tube during initial bending. Thus, the opposing of kinking of the tube is an increasing function of the decrease in thickness from fitting end to rail end and elongation of the flexible tapered grip. In this manner, the grip is elongated along the tube so as to increase anti-kinking characteristics of the overall grip and fitting assembly relative to the tube.

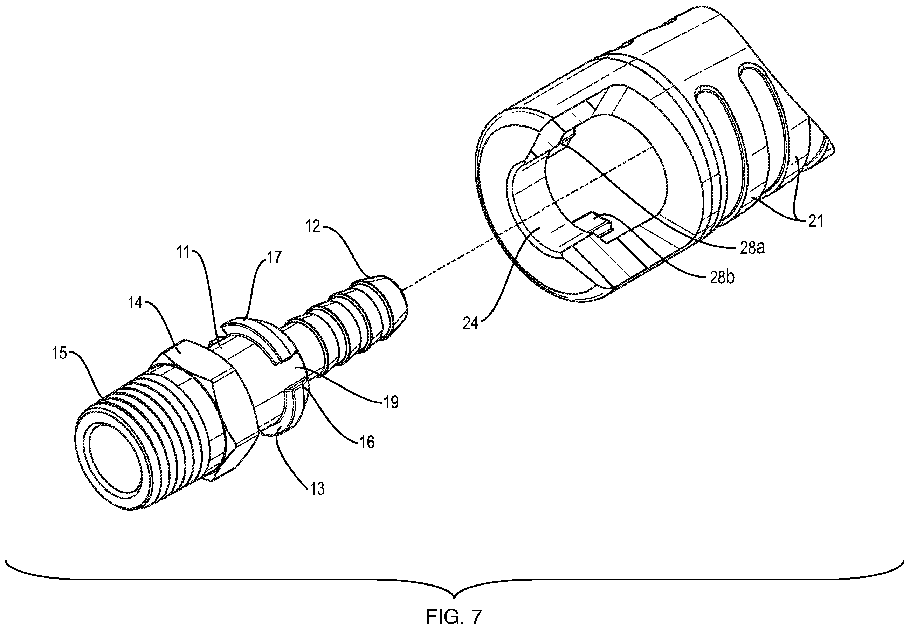

**FIG. 7** is provided so as to more clearly illustrate the details of the internal keyway boss structures. Here, a close-up view of the flexible tapered grip assembly according to the present discolure shows the grip and fitting sections disconnected and the grip section partially cutaway to reveal the internal keyway bosses **28a, 28b.** Though three exist, it should be readily apparent that due to the cutaway aspect of **FIG. 7** only two are shown. From this figure, it should be readily apparent that each keyway boss is formed integrally with the grip as part of the sidewall of the tubular interior **25.** Moreover, the keyway boss has a surface that is collinear with the interior seating surface **24.** Thus, the keyway boss structures are internal and integral with the unitarily formed grip.

In terms of implementation and use of the present example, when used in conjunction with the all brass, corrosion-resistance fittings of the present disclosure, the grip and fitting assembly of the present disclosure provides improved bend and kink resistance during installation, operation, and gladhand connections and disconnections. Specifically, the present disclosure provides an improved thermo-composite flexible tapered grip and fitting design, the grip having increased thickness at the fitting end tapering to a tear-resistant rail at the hose and tube end of the fitting. The flexible tapered grip and grip fitting of the present disclosure further simplifies manufacture of the grip fitting assembly reducing cost and providing for longer operational life under bending and kinking.

### Swivel Coupling

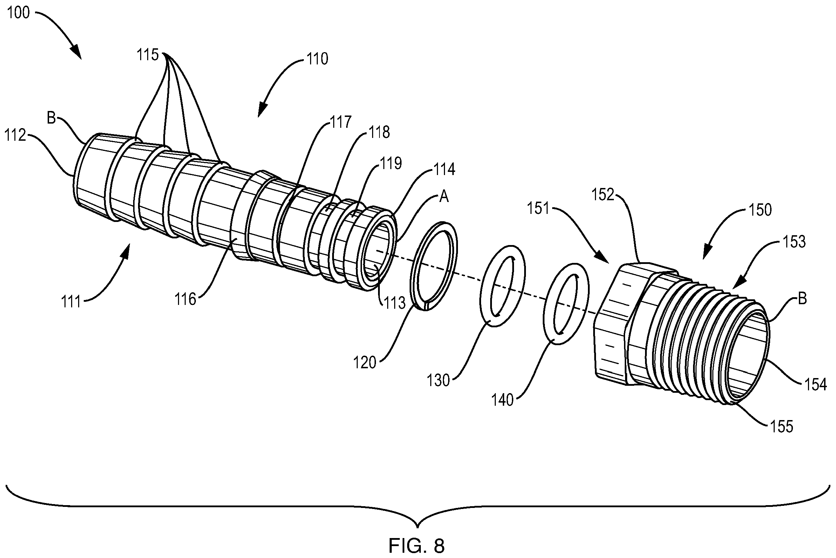

Referring to **FIG. 8****,** there is shown a swivel coupling assembly **100,** according to an aspect of this invention, in an exploded view depicting the two sub-assemblies, namely, annular barb insert assembly **110** and annular fitting sub-assembly **150.** When joined the sub-assemblies form a rotatable coupling to interconnect, for example, two fluid carrying hoses (not shown), one affixed to each sub-assembly at ends **112** (barb insert end) and **154** (fitting assembly end), respectively. It should be noted that various size hoses may be accommodated by changing the sizes of the ends **112** (barb insert end) and **154** (fitting assembly end) of the sub-assemblies and the overall diameter of the swivel coupling assembly.

Barb insert assembly **110** is a machined metallic part formed of brass or a comparable material having an outer surface **111** with a varying radius along its length and an inner surface **113** defining a bore through which fluid may flow between the hoses interconnected by the swivel coupling assembly **100.** On outer surface **111** of barb insert assembly **110** there is a barb insert **114** spaced from barb insert end **112,** along the longitudinal axis **A** of barb insert assembly **110,** and at the opposite end of said assembly. Beginning at end **112** are formed a series of annular barbs **115** (in this example there are four but there may be greater or fewer depending on the application) which are designed to be inserted into a hose up to approximately shoulder **116** and provide a certain amount of gripping force to hold the hose in place on barb insert assembly **110.** The amount of gripping force may not be sufficient to hold the hose in place in the hostile environments encountered by these components, therefore, a metal crimp (not shown) may be installed over the hose in the area of the barb insert assembly to more securely hold the hose in place.

Between shoulder **116** and barb insert **114** are formed three annular grooves **117, 118,** and **119** in outer surface **111** of barb insert assembly **110.** The groove closest to shoulder **116** may be a retaining ring groove **117** in which retaining ring **120** is disposed. The diameter of the retaining ring **120** is slightly larger than the diameter of the outer surface **111** in the area adjacent to the retaining ring groove **117,** which results in the retaining ring protruding above the outer surface **111** when it is disposed in the retaining ring groove **117.** Retaining ring **120** may be formed of a metal, such as stainless steel, carbon steel or the like, to provide it with sufficient stiffness to hold the two sub-assemblies in place when they are interconnected, as described below. Retaining ring **120** is constructed in the form of a coil so that as force is applied about the circumference it compresses and its diameter is reduced and when the force is terminated the ring expands to its neutral position with an increased diameter. The width of groove **117** is only slightly larger than the width of retaining ring **120,** allowing for insertion of the ring but providing a friction fit so as to retain it in place.

Grooves (or glands) **118** and **119** are also disposed in outer surface **111,** but they are further along the longitudinal axis **A** and closer to barb insert **114** than groove **117.** Grooves **118** and **119** may have a width greater than groove **117,** so they can accommodate O-ring seals **130** and **140,** respectively, which may have a greater width than retaining ring **120.** The diameters of O-ring seals **130** and **140** are slightly larger than the diameter of the outer surface **111** in the area adjacent to grooves **118** and **119,** which results in the O-ring seals protruding just above the outer surface **111** when they are disposed in the grooves. In this example, groove **119** abuts barb insert **114.**

Still referring to **FIG. 8****,** at end **154** of annular fitting assembly **150** are a series of threads 153 on the outer surface for engaging with the inner surface of a hose (not shown), for example. Opposite end **151** has a hexagonal nut **152,** which may be engaged by a wrench or other appropriate tool to apply torque to the annular fitting assembly **150** as it is installed on the hose. Inner surface 155 defines a bore through which fluid may flow between the hoses interconnected by the swivel coupling assembly **100.**

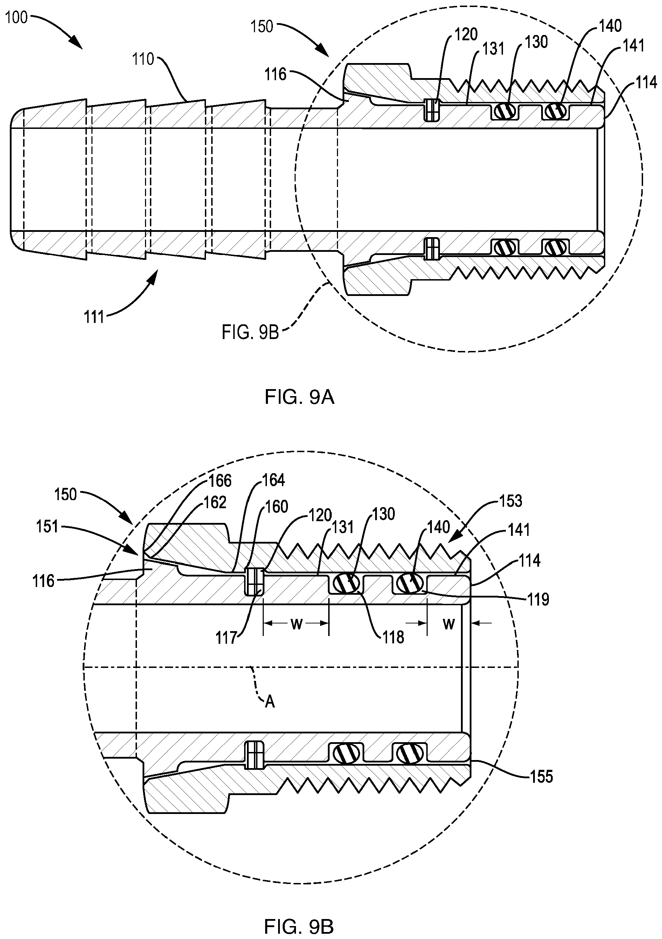

A cross-sectional view of swivel coupling assembly **100** is shown in **FIGS. 9A and 9B** with annular barb insert assembly **110** and annular fitting sub-assembly **150** joined to form a rotatable coupling. When the sub-assemblies are joined, outer surface **111** of barb insert assembly **110** (within fitting assembly **150**) is mated with inner surface **155** annular fitting sub-assembly **150** and barb insert **114** is substantially aligned with end **154.** At the opposite end **151** of annular fitting sub-assembly **150,** barb insert shoulder **116** is mated with inner surface 155 and forms a frictional connection to allow for rotation of the annular barb insert assembly **110** with respect to the annular fitting sub-assembly **150.**

Still referring to **FIGS. 9A and 9B****,** retaining ring **120** is positioned in annular recess **160** formed in inner surface **155** and also in retaining ring groove **117.** In this position, the annular barb insert assembly **110** and annular fitting sub-assembly **150** are locked together in place preventing them from being pulled apart. Retaining ring **120** is designed to withstand axial forces sufficiently greater than those likely to be encountered by the components under normal environmental conditions.

O-ring seals **130** and **140** are shown in a compressed state in annular grooves/glands **118** and **119,** respectively, since the diameter of the bore in annular fitting sub-assembly **150** defined by inner surface **155** is slightly smaller than the diameters of O-ring seals **130** and **140.** This forms tight seals with inner surface **155** to prevent fluids from flowing in the gap defined by outer surface **111** of annular barb insert assembly **110** and inner surface **155** of annular fitting sub-assembly **150.** In addition, wide bearing surfaces **131** and **141** are included adjacent to O-rings **130** and **140,** respectively, which are in contact with and bear against inner surface **155** of annular fitting sub-assembly **150** to provide stable bearing surfaces to protect the O-rings from abnormal loading. This is particularly important as the components wear over time and may otherwise become susceptible to wobble during rotation. By wide, what is meant is that the bearing surfaces are at least as wide as the width of the annular grooves/glands **118** and **119** and preferably wider. The typical range for each bearing surface may be from 1 to 3.5 times wider than the annular grooves. In this embodiment, it should be noted that bearing surface **131** is the external surface of barb insert **114.**

By way of example, bearing surface **131** may be .186in. in width and bearing surface **141** may be .113in. in width. With annular grooves **118/119** having a width of .095in. the bearing surfaces **131** and **141** are respectively 1.19 and 1.86 times the width of the annular grooves. These dimensions are provided only as an example and should not be considered as limiting the scope of the invention.

The O-ring seals **130** and **140** as well as the retaining ring **120** and the outer surface **111** in the region of the annular barb insert assembly **110** inside the bore of annular fitting sub-assembly may be coated with a lubricant to provide for a smoother and easier insertion and rotational movement when the coupling is installed. To further facilitate a smoother and easier insertion, proximate end **151** of annular fitting assembly **150,** the opening to the bore defined by inner surface 155 at location **162** is shown to have a wider diameter than the nominal diameter of the bore, such as at location **164** and throughout the rest of the bore to end **154** (excluding annular recess **160).** From location **164** to **162** the diameter of inner surface **155** gradually increases at fixed angle relative to longitudinal axis **A** (approximately 5 to 10 degrees) about the circumference of the bore, thus forming a frusto-conically shaped section between locations **162** and **164.** From location **162** to the end **151** is formed a chamfered outer edge **166** which further helps in the smooth insertion of the annular barb insert assembly **110** into the annular fitting assembly. In particular, chamfered edge **166** is helpful in transitioning the retaining ring **120** as it goes from its normal expanded position and it begins to be compressed when it enters the bore.

During the assembly process, as retaining ring **120** encounters chamfered edge **166** it is guided into place and once it enters the bore at location **162** the force and compression on retaining ring **120** begins and gradually increases until the ring reaches location **164.** As the retaining ring is pressed further into the bore beyond location **164,** it encounters annular recess **160,** at which point the force on the circumference of the retaining ring **120** is removed and retaining ring **120** expands and locks in place in annular recess **160.** Once locked in place in annular recess **160,** the retaining ring **120** prevents further movement of annular barb insert assembly **110** in either direction in the bore. Once in the installed position it can be seen that the outer surface of shoulder **116** is angled in a complimentary fashion to the inner surface **155** of the annular fitting assembly in that region to allow for a proper frictional fit and enable rotation between the two sub-assemblies.

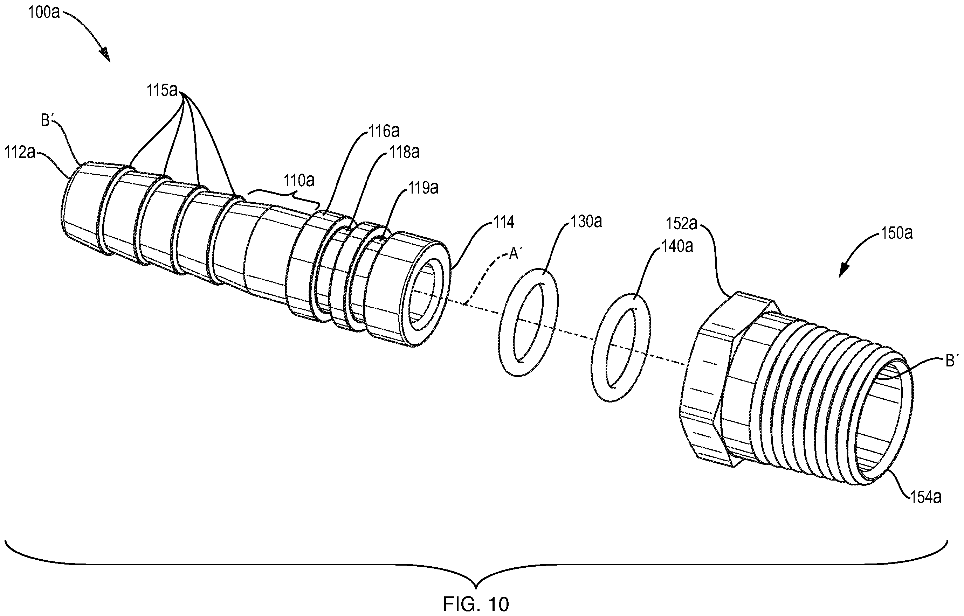

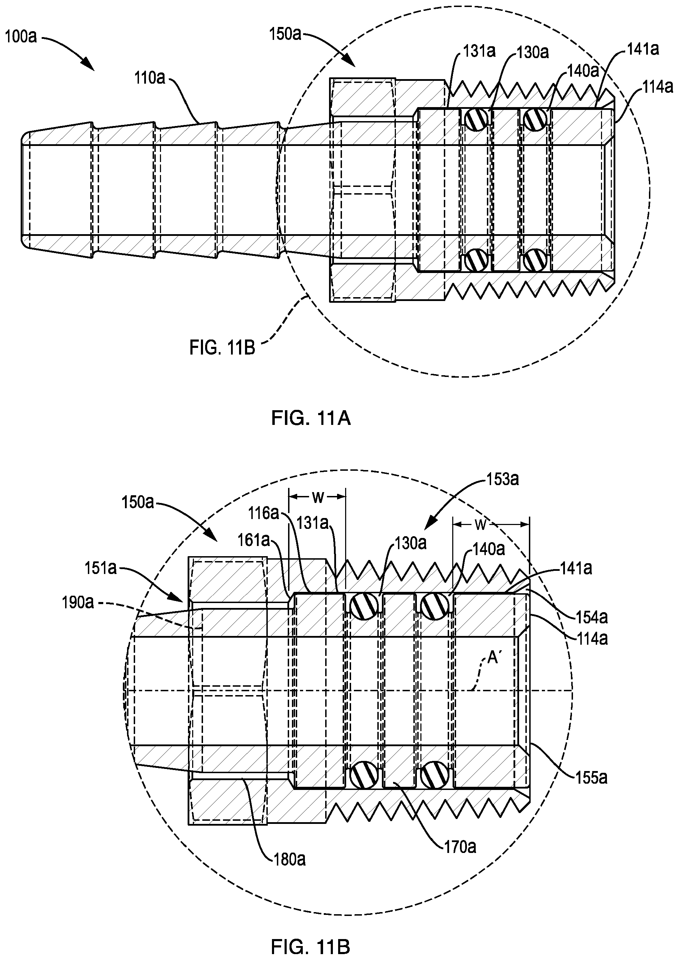

An alternative example of the swivel coupling assembly **100** of **FIG. 8** is shown in **FIGS. 10** and **11A**/11B, as swivel coupling assembly **100**a**,** which includes annular barb insert assembly **110**a and annular fitting sub-assembly **150**a**.** Most aspects of this swivel coupling assembly are the equivalent of swivel coupling assembly **100.** The most notable difference is that there is no retaining ring groove or retaining ring used in this embodiment. Corresponding components in swivel coupling assembly **100** of **FIG. 8** are similarly numbered in swivel coupling assembly **100a** of **FIG. 10** with the addition of letter designation "**a**".

Referring to **FIGS. 11A** and **11B****,** the manner of assembling and retaining the annular barb insert assembly **110**a and annular fitting sub-assembly **150**a is depicted. Annular barb insert assembly **110**a is inserted into annular fitting sub-assembly **150**a through end **154**a until the front side of shoulder **116**a of barb insert assembly **110**a abuts stop **161**a formed in the inner surface **155**a by changing the diameter of the bore defined by inner surface **155**a in region **170**a from a first diameter to a second, smaller diameter of the bore defined by inner surface **155**a in region **180**a**.** At the transition point, the stop **161**a is formed. In this position, the outer surface **111**a of section **190**a of barb insert assembly **110**a is mated with inner surface **155**a in region **180**a. It should be noted that the inner surface **155**a in region **180**a is not angled as there is no need for a wider opening and an angled transition as is the case with the embodiment of **FIGS.** 8 and **9****,** due to the absence of retaining ring **120.**

As with the embodiment in **FIGS 9A** and **9B****,** in the example of **FIGS. 11A/11B** wide bearing surfaces **131a** and **141a** are included adjacent to O-rings **130a** and **140a,** respectively, which are in contact with and bear against inner surface **155a** of annular fitting sub-assembly **150a** to provide stable bearing surfaces to protect the O-rings from abnormal loading. By wide, what is meant is that the bearing surfaces are at least as wide as the width of the annular grooves/glands **118a** and **119a** and preferably wider. In this example, it should be noted that bearing surface **131a** is the external surface of barb insert **114a.**

The typical range for each bearing surface may be from 1 to 3.5 times wider than the annular grooves. By way of example, in this example, bearing surface **131a** may be .155in. in width and bearing surface **141a** may be .3 10in. in width. With annular grooves **118a/119a** having a width of .095in. the bearing surfaces **131a** and **141a** are respectively 1.63 and 3.26 times the width of the annular grooves. Again, this is merely a specific example and should not be considered as limiting.

The O-ring seals **130a** and **140a** and the outer surface **111a** in the region of the annular barb insert assembly **110a** inside the bore of annular fitting sub-assembly may be coated with a lubricant to provide for a smoother and easier insertion and rotational movement when the coupling is installed. To further facilitate a smoother and easier insertion, proximate end **151a** of annular fitting assembly **150a** has a chamfered outer edge **166a** which further helps in the smooth insertion of the annular barb insert assembly **110a** into the annular fitting assembly.

### Hose Assemblies and Kits Utilizing the Grip and/or Swivel Coupling

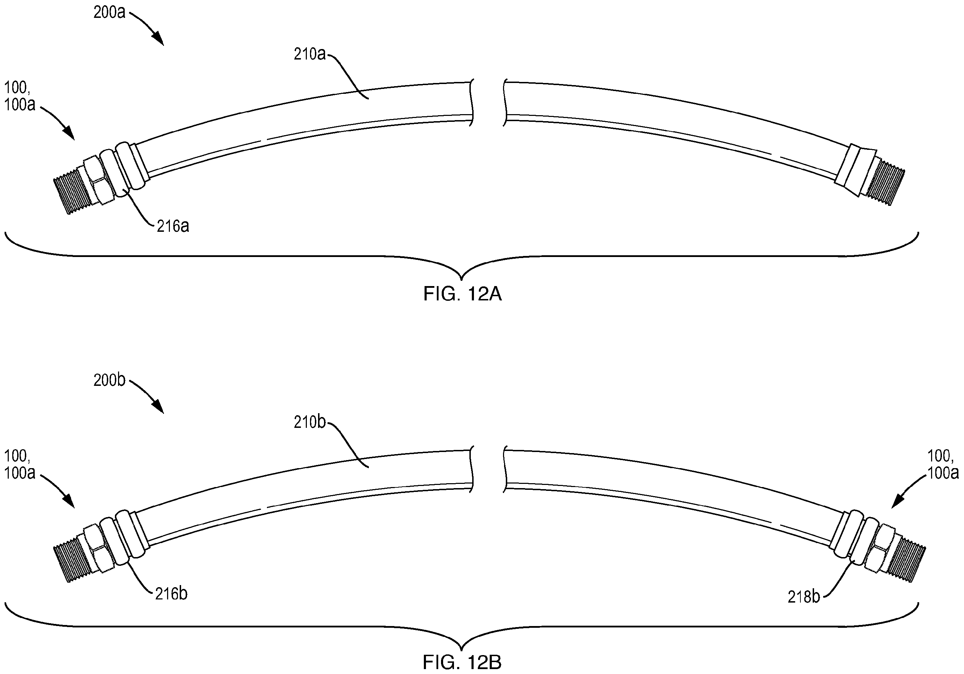

As indicated above, various hose assemblies and kits using the flexible tapered grip assembly and/or the swivel coupling will be described. As shown in **FIG. 12A****,** hose assembly **200a** includes hose **210a** which can be of any desired diameter and/or length. On a single end of hose **210a** is installed a swivel coupling assembly which can be either the swivel coupling assembly **100** or **100a,** as described above. The swivel coupling assembly is secured to hose **210a** using crimp **216a.** On the other end of hose **210a** may be installed a fitting other than the swivel coupling. Similarly, hose assembly **200b** shown in **FIG. 12B** includes hose **210b** of any length but in this case, on each end of hose **210b,** is installed a swivel coupling assembly which can be either the swivel coupling assembly **100** or **100a,** as described above. The swivel coupling assemblies are secured to hose **210b** using crimps **216b** and **218b,** respectively.

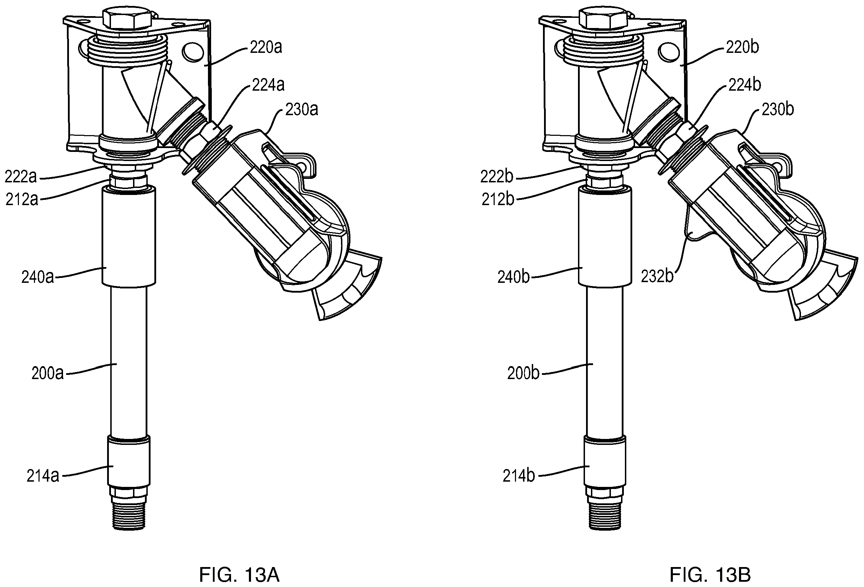

One application of hose assembly **200** is shown in **FIG. 13** to be installed on a coupling fixture application for use with a gladhand. A coupling fixture may include a swinger assembly or a pair of swinger assemblies affixed to a bulkhead (not shown). Hose assemblies **200a** and **200b** are shown to be affixed to coupling fixtures **220**a and **220**b, respectively. Hose assemblies **200**a and **200b** are affixed to first ports **222**a and **222**b by means of swivel coupling assemblies **212**a and **212**b, respectively. Second ports **224**a and **224**b of fixtures **220**a and **220**b are connected to gladhand fixtures **230**a and **230**b. Installed over hose assembly **200**a about swivel coupling assembly **212**a is swinger collar **240**a. Installed over hose assembly **200**b about swivel coupling assembly **212**b is swinger collar **240**b. Swinger collars **240**a and **240**b may contain markings or color coding to make apparent to which coupling fixture they are to be attached, for example, red for the "emergency brake" gladhand of **FIG. 13A** and blue for the normal braking gladhand of **FIG. 13B** also distinguished by "ear" **232**b**.** For example, swinger collar **240**a may be the same color as glad hand **230**a to make proper connection very easy for the installer. Likewise, swinger collar **240**b may be the same color as gladhand **230**b**.**

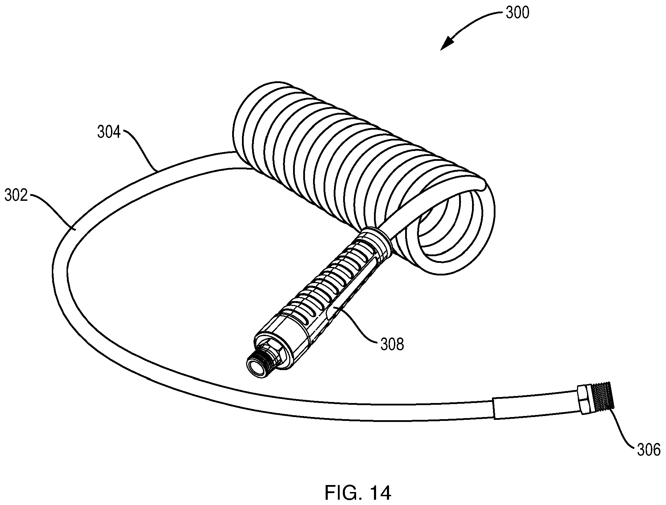

In another application, shown in **FIG. 14****,** a hose coil assembly **300** is shown to include a length of hose **302,** which may be plated with heavy duty, corrosion resistant spring guards **304** (although it is not a requirement). Assembly **300** may be an air coil assembly or may be any assembly having a first and second end onto to which grips and fixtures as described herein are applied. On a first end of hose **302** may be installed a swivel coupling assembly **306,** such as swivel coupling assembly **100** or **100**a described above. On a second end of hose **302** may be installed a grip assembly **308,** such as the flexible tapered grip assembly described herein with regard to **FIGS. 1-7****.** However, it should be noted that any suitable grip assembly could be used for grip assembly **308.**

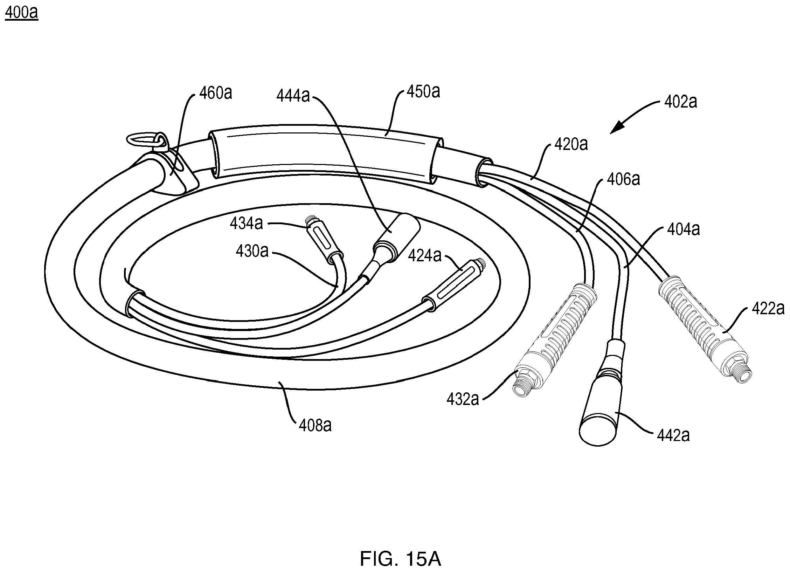

In **FIG. 15A****,** there is shown a kit **400a** which includes two or more assemblies, such as assemblies **402a, 404a,** and **406a** required for a particular installation, wherein the assemblies are neatly bundled together by a heavy duty spiral wrap **408a.** Assembly **402a** may be comprised of a hose **420a** with a grip assembly **422a** installed on one end and a swivel coupling **424a** installed on the other end. Similarly, assembly **406a** may be comprised of a hose **430a** with a grip assembly **432a** installed on one end and a swivel coupling **434a** installed on the other end. The swivel coupling assemblies may be the same as swivel coupling assembly **100** or **100**a described above. The grip assemblies may be the same as the flexible tapered grip assembly described herein with regard to **FIGS. 1-7****.** However, it should be noted that any suitable grip assembly could be used for grip assemblies. Assembly **404a** may be an electrical power assembly and comprises cable **440a** which has electrical connectors **442a** and **444a** disposed on either end of cable **440a.** Kit **400a** may also include a banner **450a** made of a durable plastic material wrapped about the kit to include labeling describing the kit and displaying the name brand of the product.

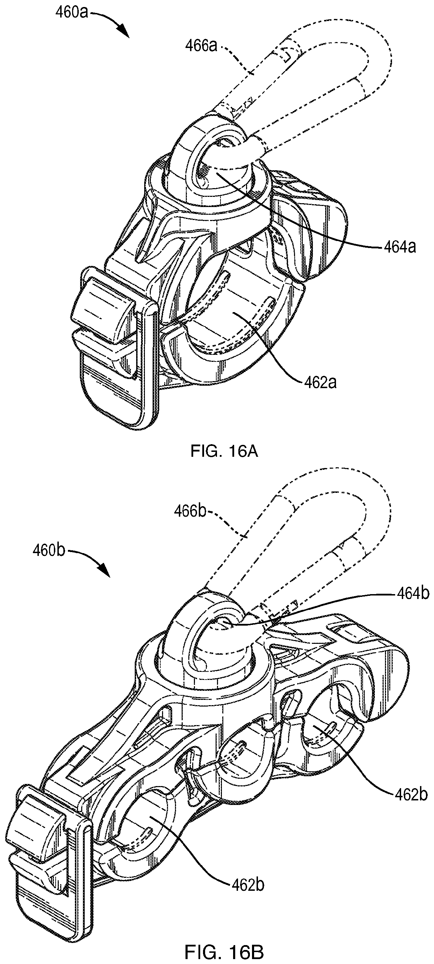

Kit **400a** may further include a clamp assembly **460a** which can be located at various positions along the lengths of the hoses/cable product to lift and secure the kit when the various assemblies are connected. Clamp assembly **460a** is more clearly depicted in **FIG. 16A** to include clamp ring **462a** which is affixed about the assemblies and the spiral wrap and a loop **464a** through which a line **466a** may be tied and fastened to a point on the vehicle or other system the kit is being mounted to elevate the assemblies as needed. Kit **400a** may include a hangar (not shown) or vertical support (not shown) attached to clamp **460a** to hold entire kit in place relative to connection points of the hose assemblies.

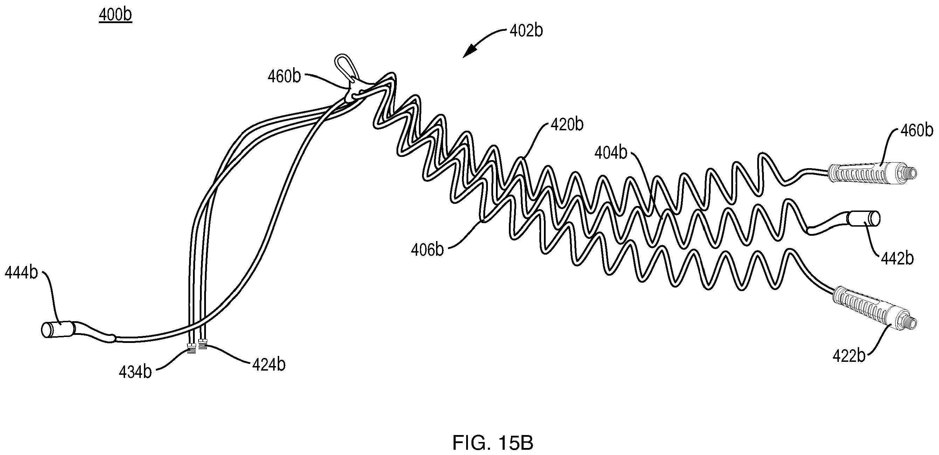

Similarly, there is shown in **FIG. 15B****,** a kit **400b** which includes two or more assemblies, such as assemblies **402b, 404b,** and **406b** required for a particular installation, wherein hose coil assembly **402b** may be comprised of a hose **420b** with a grip assembly **422b** installed on one end and a swivel coupling **424b** installed on the other end. Similarly, hose coil assembly **406b** may be comprised of a hose **430b** with a grip assembly **432b** installed on one end and a swivel coupling **434b** installed on the other end. The swivel coupling assemblies may be the same as swivel coupling assembly **100** or **100**a described above. The grip assemblies may be the same as the flexible tapered grip assembly described herein with regard to **FIGS. 1-7****.** However, it should be noted that any suitable grip assembly could be used for grip assemblies. Assembly **404b** may be an electrical power assembly and comprises cable **440b** which has electrical connectors **442b** and **444b** disposed on either end of cable **440b.**

Kit **400b** may further include a clamp assembly **460b** which can be located at various positions along the lengths of the hoses/cable product to lift and secure the kit when the various assemblies are connected. Clamp assembly **460b** is more clearly depicted in **FIG. 16B** to include clamp rings **462b** which are affixed about assemblies **402b** and **406b** and a loop **464** through which a line **466** may be tied and fastened to a point on the vehicle or other system the kit is being mounted to elevate the assemblies as needed. Kit **400b** may include a hangar (not shown) or vertical support (not shown) attached to clamp **460b** to hold the entire kit in place relative to connection points of the hose assemblies.

While the foregoing description of the invention enables one of ordinary skill to make and use what is considered presently to be the best mode thereof, those of ordinary skill will understand and appreciate the existence of variations, combinations, and equivalents of the specific embodiments and examples herein.

The above-described embodiments of the present invention are intended to be examples only. Alterations, modifications and variations may be effected to the particular embodiments by those of skill in the art as long as they do not depart from the scope of the invention, which is defined solely by the claims appended hereto.

The invention is therefore not limited by the above-described embodiments and examples, or embodiments and applications.

## Claims

1. A swivel coupling assembly (100), comprising:
a first annular member (110) having an outer surface (111) and an inner surface (113), the first annular member (110) including:
a first end portion having at least one annular barb (115);
a second end portion spaced from the first end portion and including an insert member;
an angled shoulder (116) positioned between the at least one annular barb (115) and the insert member;
at least one annular groove (118, 119) disposed in the outer surface (111) of the first annular member (110) and positioned between the shoulder (116) and the insert member, the at least one annular groove (118, 119) containing a seal;
a first bearing surface (131) on a first side of the at least one annular groove (118, 119) in the direction of the shoulder (116) and a second bearing surface (141) on a second side of the at least one annular groove (118, 119) in the direction of the insert member; wherein the first bearing surface (131) and the second bearing surface (141) have a width equal to or greater than a width of the at least one annular groove (118, 119); and
an annular retaining ring groove (117) disposed in the surface of the first annular member (110) and positioned between the at least one annular groove (118, 119) and the shoulder (116), the annular retaining ring (120) groove (117) containing a retaining ring (120) which protrudes above the surface of the first annular member (110); and
a second annular member (150) having an outer surface and an inner surface, the inner surface defining a bore configured to receive the first annular member (110), the second annular member (150) including:
a first end portion having a first opening in communication with the bore; and
a second end portion spaced from the first end portion and having a second opening in communication with the bore;
an annular recess (160) in the inner surface of the bore, wherein the annular recess (160) is configured to receive the retaining ring (120) when the first annular member (110) is inserted into the second annular member (150), and wherein the annular recess (160) is aligned with the annular retaining ring groove (117);
wherein from a location proximate the first opening in the first end portion of the second annular member (150) to a cylindrical portion of the bore, the inner surface of the bore is frusto-conically shaped, wherein the frusto-conically shaped inner surface is angled at least five degrees with respect to a longitudinal axis of the second annular member (150);
wherein, when the first annular member (110) is inserted into the bore of the second annular member:
the retaining ring (120) is gradually compressed as the retaining ring (120) travels along the frusto-conically shaped inner surface of the bore until it reaches the annular recess (160) and expands into and is seated in the annular recess (160);
the angled shoulder (116) of the first annular member (110) conforms with and frictionally engages the frusto-conically shaped inner surface of the bore of the second annular member (150) proximate the first opening, thereby allowing the first annular member (110) to rotate relative to the second annular member (150);
the insert member of the first annular member (110) terminates in the bore proximate the second opening; and
the seal engages with and seals the bore at a location between the first and second openings of second annular member (150) and the at least one annular groove (117, 118, 119) is spaced by a distance of at least the width of the first and second bearing surfaces (131, 141) from the shoulder (116) and the second opening, respectively.

2. The swivel coupling assembly (100) of claim 1 wherein the at least one annular groove (117, 118, 119) includes a plurality of annular grooves and further included are a like plurality of seals (130, 140), one disposed in each of the plurality of annular grooves.

3. The swivel coupling assembly (100) of claim 1 wherein the first bearing surface (131) and the second bearing surface (141) have widths between one and three and one half times the width of the at least one annular groove (117, 118, 119).

4. The swivel coupling assembly (100) of claim 1 wherein the first opening in the first end portion has a chamfered edge (166).

5. The swivel coupling assembly (100) of claim 1 wherein the first end portion of the first annular member (110) includes a plurality of annular barbs which are configured to engage and retain a hose (30).

6. The swivel coupling assembly (100) of claim 1 wherein the inner surface of the first annular member (110) defines a bore configured to carry a fluid there-through.

7. The swivel coupling assembly (100) of claim 1 wherein the outer surface of the second annular member (150) includes a threaded portion for being inserted into and engaged with a hose (30) or a complimentarily threaded fixture.

8. The swivel coupling assembly (100) of claim 7 wherein the outer surface of the second annular member (150) further includes a head having a plurality of flat surfaces configured to be engaged by a tool to impart torque to rotate the second annular member (150) to engage the hose (30) or a complimentarily threaded fixture.

9. A hose assembly, comprising:
a hose (30) having a first end and a second end;
a grip and fitting assembly (10, 20) affixed to the first end of the hose (30);
a swivel coupling in accordance with claim 1 affixed to the second end of the hose (30).

10. The hose assembly of claim 9 wherein the at least one annular groove (118, 119) of the swivel coupling includes a plurality of annular grooves and further included are a like plurality of seals (130, 140), one disposed in each of the plurality of annular grooves.

11. The hose assembly of claim 9 wherein the first bearing surface (131) and the second bearing surface (141) have widths between one (1) and three and one half (3.5) times the width of the at least one annular groove (117, 118, 119).

12. The hose assembly of claim 9 wherein for the swivel coupling the first opening in the first end portion has a chamfered edge (166).

13. A kit including a plurality of hose assemblies of claim 9 bundled together with a wrap.

## Patentansprüche

1. Schwenkkupplungsanordnung (100), umfassend:
ein erstes ringförmiges Element (110), das eine Außenfläche (111) und eine Innenfläche (113) aufweist, wobei das erste ringförmige Element (110) aufweist:
einen ersten Endabschnitt, der mindestens einen ringförmigen Widerhaken (115) aufweist;
einen zweiten Endabschnitt, der von dem ersten Endabschnitt beabstandet ist und ein Einsatzelement aufweist;
eine gewinkelte Schulter (116), die zwischen dem mindestens einen ringförmigen Widerhaken (115) und dem Einsatzelement angeordnet ist;
mindestens eine ringförmige Nut (118, 119), die in der Außenfläche (111) des ersten ringförmigen Elements (110) angeordnet und zwischen der Schulter (116) und dem Einsatzelement positioniert ist, wobei die mindestens eine ringförmige Nut (118, 119) eine Dichtung enthält;
eine erste Lagerfläche (131) auf einer ersten Seite der mindestens einen ringförmigen Nut (118, 119) in der Richtung der Schulter (116) und eine zweite Lagerfläche (141) auf einer zweiten Seite der mindestens einen ringförmigen Nut (118, 119) in der Richtung des Einsatzelements; wobei die erste Lagerfläche (131) und die zweite Lagerfläche (141) eine Breite aufweisen, die mindestens so groß ist wie als eine Breite der mindestens einen ringförmigen Nut (118, 119); und
eine ringförmige Halteringnut (117), die in der Oberfläche des ersten ringförmigen Elements (110) angeordnet und zwischen der mindestens einen ringförmigen Nut (118, 119) und der Schulter (116) positioniert ist, wobei die ringförmige Haltering (120)-Nut (117) einen Haltering (120) enthält, der über die Oberfläche des ersten ringförmigen Elements (110) vorsteht; und
ein zweites ringförmiges Element (150), das eine Außenfläche und eine Innenfläche aufweist, wobei die Innenfläche eine Bohrung definiert, die dafür eingerichtet ist, das erste ringförmige Element (110) aufzunehmen, wobei das zweite ringförmige Element (150) aufweist:
einen ersten Endabschnitt, der eine erste Öffnung aufweist, die mit der Bohrung kommuniziert; und
einen zweiten Endabschnitt, der von dem ersten Endabschnitt beabstandet ist und eine zweite Öffnung aufweist, die mit der kommuniziert;
eine ringförmige Aussparung (160) in der Innenfläche der Bohrung, wobei die ringförmige Aussparung (160) dafür eingerichtet ist, den Haltering (120) aufzunehmen, wenn das erste ringförmige Element (110) in das zweite ringförmige Element (150) eingeführt wird, und wobei die ringförmige Aussparung (160) auf die ringförmige Halteringnut (117) ausgerichtet ist;
wobei von einer Stelle in der Nähe der ersten Öffnung in dem ersten Endabschnitt des zweiten ringförmigen Elements (150) zu einem zylindrischen Abschnitt der Bohrung die Innenfläche der Bohrung kegelstumpfförmig ist, wobei die kegelstumpfförmige Innenfläche um mindestens fünf Grad in Bezug auf eine Längsachse des zweiten ringförmigen Elements (150) gewinkelt ist;
wobei, wenn das erste ringförmige Element (110) in die Bohrung des zweiten ringförmigen Elements eingeführt wird:
der Haltering (120) allmählich zusammengedrückt wird, während sich der Haltering (120) entlang der kegelstumpfförmigen Innenfläche der Bohrung bewegt, bis er die ringförmige Aussparung (160) erreicht und sich in die ringförmige Aussparung (160) hinein ausdehnt und darin sitzt;
die gewinkelte Schulter (116) des ersten ringförmigen Elements (110) die gleiche Form hat wie die kegelstumpfförmige Innenfläche der Bohrung des zweiten ringförmigen Elements (150) in der Nähe der ersten Öffnung und sie reibschlüssig in Eingriff nimmt, wodurch sich das erste ringförmige Element (110) relativ zu dem zweiten ringförmigen Element (150) drehen kann;
das Einsatzelement des ersten ringförmigen Elements (110) in der Bohrung in der Nähe der zweiten Öffnung endet; und die Dichtung die Bohrung an einer Stelle zwischen der ersten und der zweiten Öffnung des zweiten ringförmigen Elements (150) in Eingriff nimmt und abdichtet und die mindestens eine ringförmige Nut (117, 118, 119) um eine Distanz von mindestens der Breite der ersten und der zweiten Lagerfläche (131, 141) von der Schulter (116) bzw. der zweiten Öffnung beabstandet ist.

2. Schwenkkupplungsanordnung (100) nach Anspruch 1, wobei die mindestens eine ringförmige Nut (117, 118, 119) mehrere ringförmige Nuten aufweist, wobei des Weiteren eine gleiche Anzahl von mehreren Dichtungen (130, 140) enthalten ist, von denen eine in jeder der mehreren ringförmigen Nuten angeordnet ist.

3. Schwenkkupplungsanordnung (100) nach Anspruch 1, wobei die erste Lagerfläche (131) und die zweite Lagerfläche (141) Breiten zwischen dem Ein- und Dreieinhalbfachen der Breite der mindestens einen ringförmigen Nut (117, 118, 119) aufweisen.

4. Schwenkkupplungsanordnung (100) nach Anspruch 1, wobei die erste Öffnung in dem ersten Endabschnitt eine geschrägte Kante (166) aufweist.

5. Schwenkkupplungsanordnung (100) nach Anspruch 1, wobei der erste Endabschnitt des ersten ringförmigen Elements (110) mehrere ringförmige Widerhaken aufweist, die dafür eingerichtet sind, in einen Schlauch (30) in Eingriff zu nehmen und zu halten.

6. Schwenkkupplungsanordnung (100) nach Anspruch 1, wobei die Innenfläche des ersten ringförmigen Elements (110) eine Bohrung definiert, die dafür eingerichtet ist, ein Fluid durch sie hindurch zu transportieren.

7. Schwenkkupplungsanordnung (100) nach Anspruch 1, wobei die Außenfläche des zweiten ringförmigen Elements (150) einen Gewindeabschnitt aufweist, der in einen Schlauch (30) oder eine mit einem komplementären Gewinde versehene Vorrichtung eingeführt und mit dieser in Eingriff gebracht werden kann.

8. Schwenkkupplungsanordnung (100) nach Anspruch 7, wobei die Außenfläche des zweiten ringförmigen Elements (150) des Weiteren einen Kopf aufweist, der mehrere flache Flächen aufweist, die dafür eingerichtet sind, durch ein Werkzeug in Eingriff genommen zu werden, um ein Drehmoment anzulegen, um das zweite ringförmige Element (150) zu drehen, um den Schlauch (30) oder eine mit einem komplementären Gewinde versehene Vorrichtung in Eingriff zu nehmen.

9. Schlauchanordnung, umfassend:
einen Schlauch (30), der ein erstes Ende und ein zweites Ende aufweist;
eine Griff- und Anschlussstückanordnung (10, 20), die an dem ersten Ende des Schlauchs (30) befestigt ist;
eine Schwenkkupplung nach Anspruch 1, die an dem zweiten Ende des Schlauchs (30) befestigt ist.

10. Schlauchanordnung nach Anspruch 9, wobei die mindestens eine ringförmige Nut (118, 119) der Schwenkkupplung mehrere ringförmige Nuten aufweist, wobei des Weiteren eine gleiche Anzahl von mehreren Dichtungen (130, 140) enthalten ist, von denen eine in jeder der mehreren ringförmigen Nuten angeordnet ist.

11. Schlauchanordnung nach Anspruch 9, wobei die erste Lagerfläche (131) und die zweite Lagerfläche (141) Breiten zwischen dem Einfachen (1-Fachen) und dem Dreieinhalbfachen (3,5-Fachen) der Breite der mindestens einen ringförmigen Nut (117, 118, 119) aufweisen.

12. Schlauchanordnung nach Anspruch 9, wobei für die Schwenkkupplung die erste Öffnung in dem ersten Endabschnitt eine geschrägte Kante (166) aufweist.

13. Bausatz, aufweisend mehrere Schlauchanordnungen nach Anspruch 9, die mit einer Umhüllung zu einem Bündel zusammengefasst sind.

## Revendications

1. Ensemble raccord tournant (100), comprenant :
un premier élément annulaire (110) ayant une surface externe (111) et une surface interne (113), le premier élément annulaire (110) comportant :
une première partie d'extrémité ayant au moins une cannelure annulaire (115) ;
une seconde partie d'extrémité espacée de la première partie d'extrémité et comportant un élément d'insertion ;
un épaulement incliné (116) positionné entre la au moins une cannelure annulaire (115) et l'élément d'insertion ;
au moins une rainure annulaire (118, 119) disposée dans la surface externe (111) du premier élément annulaire (110) et positionnée entre l'épaulement (116) et l'élément d'insertion, la au moins une rainure annulaire (118, 119) contenant un joint d'étanchéité ;
une première surface d'appui (131) sur un premier côté de la au moins une rainure annulaire (118, 119) dans la direction de l'épaulement (116) et une seconde surface d'appui (141) sur un second côté de la au moins une rainure annulaire (118, 119) dans la direction de l'élément d'insertion ; dans lequel la première surface d'appui (131) et la seconde surface d'appui (141) ont une largeur égale ou supérieure à une largeur de la au moins une rainure annulaire (118, 119) ; et
une rainure de bague de retenue annulaire (117) disposée dans la surface du premier élément annulaire (110) et positionnée entre la au moins une rainure annulaire (118, 119) et l'épaulement (116), la rainure (117) de bague de retenue (120) annulaire contenant une bague de retenue (120) qui fait saillie au-dessus de la surface du premier élément annulaire (110) ; et
un second élément annulaire (150) ayant une surface externe et une surface interne, la surface interne définissant un alésage conçu pour recevoir le premier élément annulaire (110), le second élément annulaire (150) comportant :
une première partie d'extrémité ayant une première ouverture en communication avec l'alésage ; et
une seconde partie d'extrémité espacée de la première partie d'extrémité et ayant une seconde ouverture en communication avec l'alésage ;
un évidement annulaire (160) dans la surface interne de l'alésage, dans lequel l'évidement annulaire (160) est conçu pour recevoir la bague de retenue (120) lorsque le premier élément annulaire (110) est inséré dans le second élément annulaire (150), et dans lequel l'évidement annulaire (160) est aligné avec la rainure de bague de retenue annulaire (117) ;
dans lequel depuis un emplacement à proximité de la première ouverture dans la première partie d'extrémité du second élément annulaire (150) jusqu'à une partie cylindrique de l'alésage, la surface interne de l'alésage est de forme tronconique, dans lequel la surface interne de forme tronconique est inclinée d'au moins cinq degrés par rapport à un axe longitudinal du second élément annulaire (150) ;
dans lequel, lorsque le premier élément annulaire (110) est inséré dans l'alésage du second élément annulaire :
la bague de retenue (120) est progressivement comprimée au fur et à mesure que la bague de retenue (120) avance le long de la surface interne de forme tronconique de l'alésage jusqu'à ce qu'elle atteigne l'évidement annulaire (160) et se dilate et vienne se loger dans l'évidement annulaire (160) ;
l'épaulement incliné (116) du premier élément annulaire (110) se conforme à et vient en prise par frottement avec la surface interne de forme tronconique de l'alésage du second élément annulaire (150) à proximité de la première ouverture, permettant ainsi au premier élément annulaire (110) de tourner par rapport au second élément annulaire (150) ;
l'élément d'insert du premier élément annulaire (110) se termine dans l'alésage à proximité de la seconde ouverture ; et
le joint d'étanchéité vient en prise avec et assure l'étanchéité de l'alésage à un emplacement entre les première et seconde ouvertures du second élément annulaire (150) et la au moins une rainure annulaire (117, 118, 119) est espacée d'une distance d'au moins la largeur des première et seconde surfaces d'appui (131, 141) de l'épaulement (116) et de la seconde ouverture, respectivement.

2. Ensemble raccord tournant (100) selon la revendication 1, dans lequel la au moins une rainure annulaire (117, 118, 119) comporte une pluralité de rainures annulaires et une pluralité similaire de joints d'étanchéité (130, 140) sont en outre inclus, un disposé dans chacune de la pluralité de rainures annulaires.

3. Ensemble raccord tournant (100) selon la revendication 1, dans lequel la première surface d'appui (131) et la seconde surface d'appui (141) ont des largeurs comprises entre une et trois fois et demie la largeur de la au moins une rainure annulaire (117, 118, 119).

4. Ensemble raccord tournant (100) selon la revendication 1, dans lequel la première ouverture dans la première partie d'extrémité a un bord chanfreiné (166).

5. Ensemble raccord tournant (100) selon la revendication 1, dans lequel la première partie d'extrémité du premier élément annulaire (110) comporte une pluralité de cannelures annulaires qui sont conçues pour venir en prise avec et retenir un tuyau (30).

6. Ensemble raccord tournant (100) selon la revendication 1, dans lequel la surface interne du premier élément annulaire (110) définit un alésage conçu pour transporter un fluide à travers celui-ci.

7. Ensemble raccord tournant (100) selon la revendication 1, dans lequel la surface externe du second élément annulaire (150) comporte une partie filetée destinée à être insérée dans et mise en prise avec un tuyau (30) ou un accessoire fileté complémentaire.

8. Ensemble raccord tournant (100) selon la revendication 7, dans lequel la surface externe du second élément annulaire (150) comporte en outre une tête ayant une pluralité de surfaces plates conçues pour être mises en prise par un outil pour communiquer un couple pour faire tourner le second élément annulaire (150) pour mettre en prise le tuyau (30) ou un accessoire fileté complémentaire.

9. Ensemble tuyau, comprenant :
un tuyau (30) ayant une première extrémité et une seconde extrémité ;
un ensemble poignée et raccord (10, 20) fixé à la première extrémité du tuyau (30) ;
un raccord tournant selon la revendication 1 fixé à la seconde extrémité du tuyau (30).

10. Ensemble tuyau selon la revendication 9, dans lequel la au moins une rainure annulaire (118, 119) du raccord tournant comporte une pluralité de rainures annulaires et une pluralité similaire de joints d'étanchéité (130, 140) sont en outre inclus, un disposé dans chacune de la pluralité de rainures annulaires.

11. Ensemble tuyau selon la revendication 9, dans lequel la première surface d'appui (131) et la seconde surface d'appui (141) ont des largeurs comprises entre une (1) et trois fois et demie (3,5) la largeur de la au moins une rainure annulaire (117, 118, 119).

12. Ensemble tuyau selon la revendication 9, dans lequel, pour le raccord tournant, la première ouverture dans la première partie d'extrémité a un bord chanfreiné (166).

13. Kit comportant une pluralité d'ensembles tuyau selon la revendication 9 regroupés avec une enveloppe.
